# EUROPEAN PATENT SPECIFICATION

(11) **EP 3 057 291 B1**
(45) Date of publication and mention of the grant of the patent: **18.11.2020**
(21) Application number: 16154447.3
(22) Date of filing: 05.02.2016
(51) Int. Cl.: H04L 29/08

(54) **METHOD FOR PROVIDING A THIRD PARTY SERVICE ASSOCIATED WITH A NETWORK-ACCESSIBLE SITE**
VERFAHREN ZUR BEREITSTELLUNG EINES DRITTPARTEIDIENSTES MIT EINER NETZWERKZUGÄNGLICHEN STELLE
PROCÉDÉ PERMETTANT DE FOURNIR UN SERVICE DE TIERS ASSOCIÉ À UN SITE ACCESSIBLE PAR RÉSEAU

(30) Priority: 13.02.2015 US 201514621518
(43) Date of publication of application: 17.08.2016
(73) Proprietor: Nosto Solutions, Ltd., 00100 Helsinki (FI)
(72) Inventor: Valvanne, Juha, 00150 Helsinki (FI); Pöyhönen, Antti, 01600 Vantaa (FI); Luostarinen, Jani, 00150 Helsinki (FI)
(74) Representative: Boco IP Oy Ab

(56) References cited:
- WO-A2-2009/009257
- US-A1- 2008 288 303
- US-A1- 2009 216 882
- US-A1- 2013 304 906

## Description

### FIELD OF THE INVENTION

The invention generally relates to sharing information related to network-accessible sites with third party service providers. More specifically, the invention relates to computer implemented services for providing a third party service associated with a network-accessible site.

### BACKGROUND OF THE INVENTION

Currently, many network-accessible sites such as web sites utilize third party services to add functionalities to web sites. The functionalities added to the web sites can be web site analytics, discussion boards and social media plug-ins.

Third party scripts are generally included into HyperText Markup Language (HTML) codes of a web site for providing the third party services on the web site. The third party scripts capture user behavior data to provide behavior-driven information such as product recommendations to users. However, the third party scripts may not capture details associated with the content published on the web site. Without knowledge of the content published on the web site, the third party service provider may not be able to provide appropriate recommendations to the users.

There are some systems where the third party service provider can be reported with the content published on the web site and the user behavior data to generate appropriate recommendations on the web site. However, currently, an owner of the web site needs to implement two different interfaces, namely, a scripting interface and a data exchange interface. The scripting interface is required to capture the user behavior data from the web site. The data exchange interface is required to transfer the content published on the web site to the third party service provider. Generally, a back-end integration approach implements a direct integration between the web site and the third party service provider. Typically, a batch job is executed periodically to send the web site information to the third party service provider using a protocol such as a File Transfer Protocol (FTP). Thus, the owner of the web site is required to actively send the web site information to the third party service provider. Due to the back-end integration, the third party service provider may not receive real-time data between periodically executed integration. Additionally, the implementation of a system with the back-end integration is time consuming and expensive. US patent application 2013/0304906 discloses a method for monitoring and tracking browsing activity on handled devices.

WO publication 2009/009257 discloses a system for targeting data to users on mobile devices. A mobile identifier is extracted from a user request and mapped against a session identifier. The session identifier is used to collect a user behavior dataset and to communicate data to the user.

US patent application 2013/0304906 discloses a method an apparatus for internet traffic monitoring by third parties using monitoring implements transmitted via piggybacking HTTP transactions.

Therefore, there is a need for an improved method and system for gathering information about a network-accessible site and users of the network-accessible site.

### SUMMARY OF THE INVENTION

The invention is defined by method claim 1 and system claim 8. Further embodiments are set out in the dependent claims. The method of the invention method for providing a third party service is associated with a network-accessible site. The method comprises providing a client-side application in communication with a third party server that is in communication with a third party database, installing a client-side script on the client-side application, and the client side script gathering information associated with a network-accessible site in response to access of the network-accessible site via the client-side application. The gathered information associated with the network-accessible site comprising a user identifier, structured content published on the network-accessible site in accordance with a semantic mark-up format; and user behavior data associated with access of the network-accessible site. The client-side script transfers the gathered information to the third party server, which stores the gathered information received from the client-side script in a form of replica of network- accessible site records in the database. The third party server provides a third-party service in the form of personalized content to the user based on the gathered information. The created replica includes structured content in the database based on the gathered information via the client-side script. The method further comprises dynamically updating the replica including the structured content based on updated information associated with the network-accessible site and gathered via the client-side script. The third party server forwards the replica of the network-accessible site record to one or more additional service providers. The third party server further extends the client-side script by adding one or more service provider specific segments for sharing the network-accessible site and user behavior data with one or more additional service providers. The client script that was extended by the third party server reports the gathered information to the one or more additional service providers, which create a personalized content for identified users by making use of the gathered information.

The system of the invention that provides a third party service comprises a network-accessible site that has a page. The page comprises visible information containing a structured content being visible on the network-accessible site, and invisible information being invisible on the network accessible site. The invisible information comprises user-behavior data and a semantic mark-up of the structured content. A client-side script is installed on a client-side application. The client-side script is in communication with the network-accessible site to gather information associated with the network-accessible site in response to access of the network-accessible site via the client-side application. The gathered information that is gathered by the client-side script comprises a user identifier, structured content published on the network-accessible site, and user behavior data associated with access of the network-accessible site. A third-party server is in communication with the client-side script to receive the gathered information associated with the network-accessible site from the client-side script. The third-party server is in communication with the client-side application to provide a third party service based on the gathered information received from the client-side script. Further, the third-party server is connected to a database to store the gathered information in a form of replica of network-accessible site records. Furthermore, the third-party server has updating means for dynamically updating the replica of network-accessible site records. Additional databases have replica of network-accessible site records held by one or more additional service providers. The client- side script has a segment for sharing the network-accessible site and user behavior data with one or more additional service providers.

The invention enables forwarding information about a network-accessible site and users of the network-accessible site also to other service providers requiring this information and which the network accessible site owner wants to use. Sharing the information enables supporting multitude of services through a single scripting approach.

In an earlier application of the applicant, US 14/255,733, filed on 04/17/2014, it was described how replica of records were built from a site and how the user behavior from a site was captured. Personalized end content was published for clients using this information.

There is, however, a need for producing new kind of information for sites that construct the end content by themselves of different reasons, such as security requirements, or for the sake of keeping their own control in the production of the content itself.

The information in the sites from which the replica of records are built is changing and therefore the replica of records need to be updated preferably as soon as changes occur.

Instead of publishing end content, for clients of the type of sites that construct their end content by themselves, the solution of this invention keeps the replica of records up-to-date and reports the information in the form of the stored site records and user behavior data. The replica can be reported and kept up-to-date for multiple other parties, too, in addition to the third party server, and instead of publishing end user content directly for each person/server, this invention provides a solution for sending suggested records' identifiers to the clients of the sites.

The site records can have e.g. lists of the site's products and services and the status of those. When replica of site records are reported to the third party server and other parties, the information is associated with user references and/or identifiers as well as user behavior in the messages. All information might even be formalized in some way by the third party service.

### BRIEF DESCRIPTION OF THE DRAWINGS

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the invention.
Figure 1 illustrates a block diagram of a system for providing a third party service associated with a network-accessible site in accordance with various embodiments of the invention.
Figure 2 illustrates a flowchart of a method for transferring network-accessible site and user behavior data using a single scripting approach in accordance with various embodiments of the invention.
Figure 3 illustrates a flowchart of a method for providing a third party service associated with a network-accessible site in accordance with various embodiments of the invention.
Figure 4 illustrates an extension to the site records of figure 1 for sharing network-accessible site.
Figure 5 illustrates an extension to the site script of figure 1 with added service provider specific segment for sharing network-accessible site and user behavior data

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE INVENTION

Before describing in detail embodiments that are in accordance with the invention, it should be observed that the embodiments reside primarily in combinations of method steps and system components for providing a third party service associated with a network-accessible site using a single scripting approach. Accordingly, the method steps and system components have been represented where appropriate by conventional symbols in the drawings, showing only those specific details that are pertinent to understanding the embodiments of the invention so as not to obscure the disclosure with details that will be readily apparent to those of ordinary skill in the art having the benefit of the description herein.

In this document, the terms "comprises," "comprising," or any other variation thereof, are intended to cover a non-exclusive inclusion, such that a process, method, article, or apparatus that comprises a list of objects does not include only those objects but may include other objects not expressly listed or inherent to such process, method, article, or apparatus. An object proceeded by "comprises ...a" does not, without more constraints, preclude the existence of additional identical objects in the process, method, article, or apparatus that comprises the object.

Various embodiments of the invention provide a method for providing a third party service associated with a network-accessible site. The method includes automatically transferring information associated with a network-accessible site using a single scripting approach to a third party service provider. In accordance with the various embodiments, the term "network-accessible site" refers to a site which is accessible via a network through addresses known as Uniform Resource locators (URL). The network can be one of, but not limited to, internet, intranet, Local Area Network (LAN), Wireless Local Area Network (WLAN), Wireless Wide Area Network (WWAN), Wireless Metropolitan Area Network (WMAN), Wide Area Network (WAN) and telecommunication network. The network-accessible site can be accessed using a client device such as, but not limited to, computers, laptops, phones, tablets, handheld devices, television, portal digital devices and other media accessible devices.

In accordance with the various embodiments, the method includes providing a client-side script which is configured to be installed on a client-side application. The client-side script can be a script such as, but not limited to, a JavaScript®, a Visual Basic script (VBScript®), Ecmascript®, Dart®, Flash®, Silverlight®, Native Client modules, Java® and script of any other language which can be implemented on the client-side application to achieve the desired objective. Further, the client-side script can be implemented as a plug-in which can be installed in the client-side application. The client side application can be an application such as, but not limited to, a browser and a mobile phone application.

In accordance with the various embodiments, the client-side script gathers information associated with the network-accessible site in response to access of the network-accessible site via the client-side application. The information associated with the network-accessible site includes content published on the network-accessible site and user behavior data associated with access of the network-accessible site. The information is gathered in response to access of the network-accessible site via the client-side application. Based on the information gathered using the client-side script, the third party service provider can provide users with one or more services such as, but not limited to, recommendations, advertisements, product related information, discount offers and coupons.

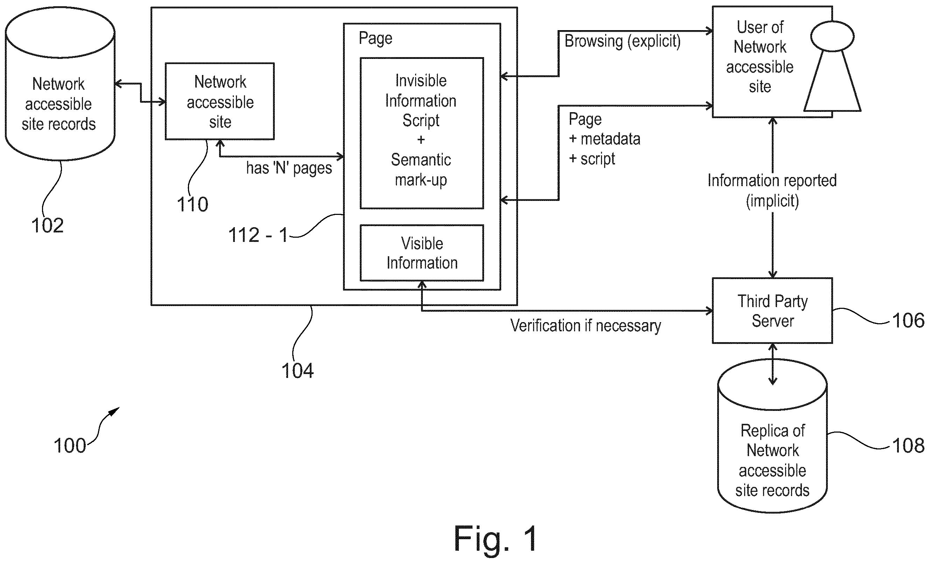

Referring to the figures and in particular Figure 1, wherein a block diagram of a system 100 for providing a third party service associated with a network-accessible site is illustrated in accordance with various embodiments of the invention. As illustrated, system 100 includes a record database such as a network-accessible site records database 102, a client-side application 104, a third party server 106 and a third party database 108.

Network-accessible site records database 102 is configured to store network-accessible site information of one or more network-accessible sites. The network-accessible site information includes information such as, but not limited to, content published on the network-accessible site, information about different pages of the network-accessible site and URL of the network-accessible site. The published content can be one or more of, but not limited to, text, image, video or other media content.

As illustrated, client-side application 104 is configured to allow access to one or more network-accessible sites such as a network-accessible site 110. Client-side application 104 can be a browser including the client-side script (not illustrated in Fig. 1). The client-side script is configured to be installed on client side application 104. The client-side script can be a browser plug-in, which can be installed on client-side application 104. The client-side script is configured to gather information associated with the one or more network-accessible sites. The information associated with the one or more network-accessible sites includes the network-accessible information and user behavior data. The user behavior data can include one or more of, but not limited to, keywords used for searching, products viewed, products added in a shopping cart and products purchased. The client-side script is configured to gather the information associated with the one or more network-accessible sites when a user accesses the one or more network-accessible sites. The client-side script transfers the gathered information to third party server 106.

The one or more network-accessible sites such as network-accessible site 110 are configured to allow users to browse through the published content using client-side application 104. As illustrated, network-accessible site 110 can include one or more pages such as 112-1. Each page such as 112-1 as shown in Fig. 1, of the one or more pages can include an invisible information script and visible information. The invisible information scripts can include semantically marked parts of the published content. The semantic markup presents structured records without affecting visual representation of network-accessible site 110 and pages 112-n. The semantic mark-up of the published content enables the client-side script to transfer structured information to third party server 106. For example, the information sent to third party server 106 can be one or more of, but not limited to, product items, purchase orders and articles. In an embodiment, the one or more pages include only the visible information. In accordance with the embodiment, the client-side script gathers the visible information and transfers the visible information to third party server 106.

Third party server 106 is configured to provide content and behavior based services to users based on information collected from the users. Third party server 106 is configured to receive information associated with the one or more network-accessible sites from the client-side script. Third party server 106 is configured to provide appropriate services to a user based on information received from client-side script. The appropriate services can be related to providing one or more of, but not limited to, behavior driven information, recommendations, advertisements, offers and any other third party services to the user.

There can be a plurality of instances of client-side application 104 on a plurality of client devices. The plurality of instances can transfer information associated with a plurality of network-accessible sites. The transferred information can include information associated with content published on the plurality of network-accessible sites and user behavior data of a plurality of users associated with the plurality of network-accessible sites. Third party server 106 can accordingly be configured to receive the information associated with the plurality of network-accessible sites for providing appropriate services to one or more of the plurality of users.

Third party server 106 is also configured to verify the accuracy of information received from a user of client-side application 104. Third party sever 106 can include an anti-fraud module (not illustrated in Fig. 1) to prevent third party server 106 from receiving false information such as the information received from malicious users. The anti-fraud module can be configured to perform one or more functions such as, but not limited to, utilizing statistical methods to find correct information against the information gathered from multiple users, using past behavior of a user to rank trustworthiness of the user, verifying the content published on the one or more network-accessible sites by mimicking client-side application 104 to fetch the information from the one or more network-accessible sites using a crawler. For instance, if the anti-fraud module is configured to utilize the statistical methods for finding correct information, then the antifraud module compares different versions of information received by the one or more users and chooses the most popular version. Taking another instance, if the anti-fraud module is configured to monitor the rate and distribution of information over Internet Protocol (IP) addresses of users, and identifiers of browser, user-agent and cookies, then the anti-fraud module can identify non-human malicious events.

Third party database 108 is also configured to create and store a replica of the network-accessible site information. Third party database 108 is configured to store the replica of the network-accessible site information stored in network-accessible site records database 102. The network-accessible site information is present in the information transferred from the plurality of instances of client-side application 104 to third party server 106. Further, the data stored in third party database 108 is updated when third party server 106 receives information from the plurality of instances of client-side application 104. Third party database 108 is also updated when third party server 106 analyzes the received information, wherein the analysis can be performed during fraud detection. The data stored in third party database 108 is utilized by third party server 106 to provide the appropriate services to users.

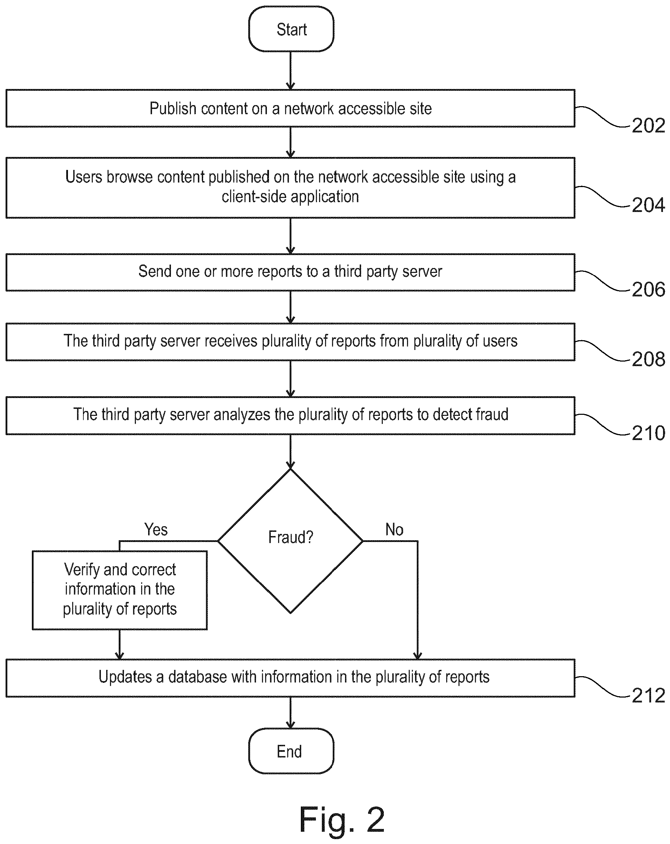

Figure 2 illustrates a flowchart of a method transferring network-accessible site and user behavior data using a single scripting approach in accordance with various embodiments of the invention.

At 202, a network-accessible site owner publishes information on a network-accessible site such as network-accessible site 110. The information can be text, image, video or other media content. At 204, a user browses the network-accessible site using a client-side application such as client-side application 104, wherein browsing includes performing one or more of, but not limited to, visiting, interacting and performing actions on the network-accessible site. When the user browses the network-accessible site, one or more reports are generated, wherein the one or more reports include information published on the network-accessible site and user behavior data. Thereafter, at 206, the one or more reports are automatically sent to a third party server such as third party server 106. The third party server can receive a plurality of reports corresponding to a plurality of users. At 208, the third party server receives the plurality of reports from the plurality of users. At 210, the third party server analyzes the plurality of reports to detect any fraud by identifying false information from malicious users. The third party server can detect fraud using the anti-fraud module. If there is no fraud, the third party server updates a database such as third party database 108 with the information in the plurality of reports at 212. If fraud is detected, the third party server verifies and corrects the information before updating the database.

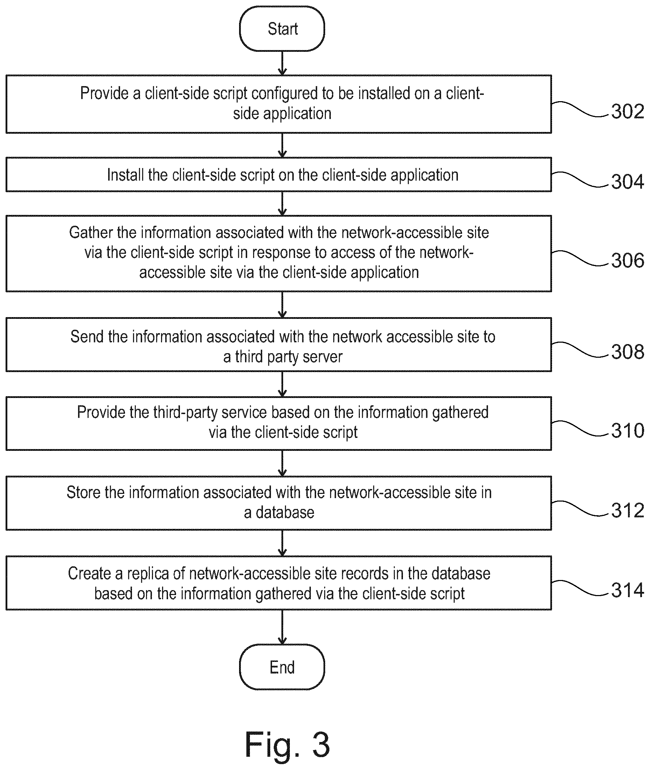

Figure 3 illustrates a flowchart of a method for providing a third party service associated with a network-accessible site in accordance with various embodiments of the invention.

At 302, a client-side script is provided which is configured to be installed on a client-side application such as client-side application 104. In accordance with the various embodiments, the client-side script is configured to gather information associated with the network-accessible site in response to access of the network-accessible site via the client-side application. At 304, the client-side script is installed on the client-side application. At 306, the information associated with the network-accessible site is gathered via the client-side script in response to access of the network-accessible site via the client-side application. For example, when a user accesses a web site using a web browser, content such as text and image published on the website is gathered by the client-side script. At 308, the information associated with the network-accessible site is transferred to a third party server. At 310, the third-party service is provided to users based on the information gathered via the client-side script. At 312, the information associated with the network-accessible site is stored in a database such as third party database 108. At 314, a replica of network-accessible site records is created in the database based on the information gathered via the client-side script. The content published on the network-accessible site can include a structured data created using a semantic mark-up format. For example, products displayed on an e-store web site can be in a structured format and a semantic tag can be included for each product displayed on the e-store web site. In addition, the replica of the network-accessible site records can be updated when the content published on the network-accessible site is updated by an owner of the network-accessible site.

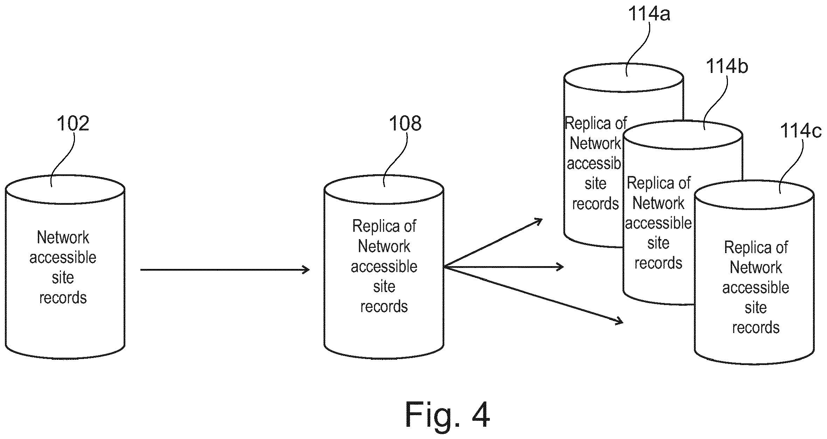

Figure 1 describes how network- accessible site records (102) are transferred to the Third Party Server (106) which then creates a Replica of Network accessible site records (108). Figure 4 adds a description how the network- accessible site records also can be forwarded to other service providers so that these service providers could share information of users' in order to create personalized content for users they have information about, i.e. information of the users' interests, shopping behavior, internet use etc. The personalized content is thus content that is affected by the behavior of the user in another service.

So that it would be possible for a service provider to make use of information of user behavior in another service provider's service, a user must be identified by means of e.g. a common user identifier by both service providers or by all service providers if several service providers are involved. Thereafter also user behavior data associated with this user identifier can be shared by the service providers.

Figure 4 thus illustrates an extension to figure 1 for sharing network-accessible to other service providers using a single scripting approach. For sharing the network- accessible site records, the 3rd party server can send updates to other service providers either continuously as updates are done, or in batches where multiple records are updated during the process. For this purpose, the system 100 includes, in addition to the network-accessible site records database 102 and the third party database 108 with replica of network-accessible site records also additional databases 114a, 114b and 144c with replica of network-accessible site records held by such other service providers.

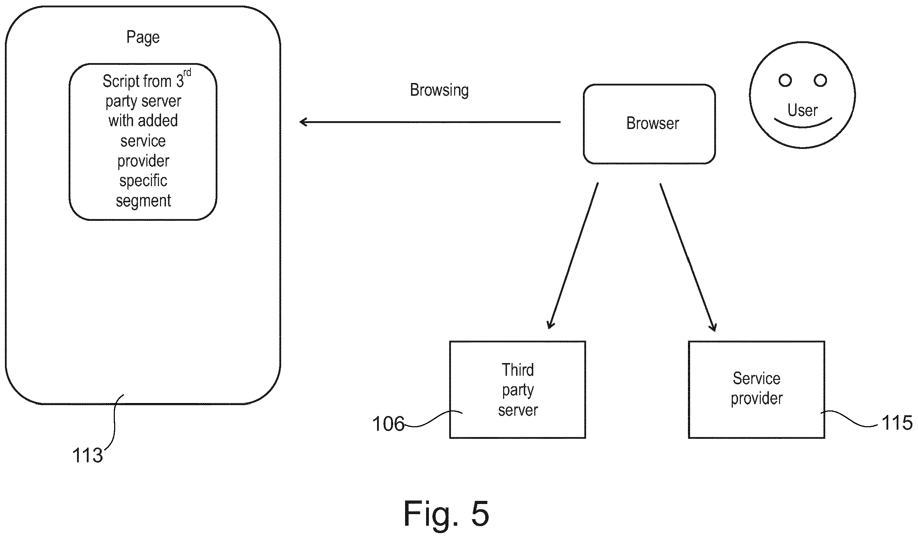

Figure 5 describes how the client-side application reports information to the third party server 106 and to another service provider 115 while the user is browsing the network accessible site. The information is reported by executing the script created by the third party server in a page 113 of the network- accessible site 110. The reported information can be user references and/or user behavior.

Figure 5 thus illustrates an extension to the site script of figure 1 in that page 13 has an added service provider specific segment for sharing network-accessible site and user behavior data (from users using services from the other service providers) by using a single scripting approach.

When a user's behavior in one service can be used to affect the content of a service from another service, these services need a way to identify the same user across the services. Sharing the identity information of the user of the network accessible site to other service providers can be automated by the third party server using the single scripting approach. Identifying the user can be done by adding new service provider specific segments to the client-side script executed by the client-side application. These segments are executed by the client-side application which has access to user references used in both services and can thus send the other services user reference to the other service. Typically the segment transmits the service provider's user reference to the 3rd party server or the 3rd party server's user reference is sent to the service provider.

Once the user references have been shared and the site records have been transferred, the 3rd party server can process the user's behavior and send the information that is useful for personalizing the experience for the user. This information can be the identifiers and site records that are associated to the user or could otherwise be of interest to the user.

In some circumstances it can be also desired to send the user's behavior on the network accessible site directly to the service provider in addition to the 3rd party server. Some typical reasons for this is that it enables the service provider to better personalize their service to the user or it enables the service provider to more accurately report how the service provider is creating value to the network accessible site owner, for example the performance of on-line advertisements.

Sending the user's behavior information on the network accessible site directly to the service provider can be automated by the third party server using the single scripting approach. Sending user's behavior information to the service provider can be done by adding new service provider specific segments to the client-side script executed by the client-side application.

These segments can be produced by the 3rd party server automatically and sent to the client-side application, which then executes them and sends the behavior information to the service provider.

The disclosed method transfers information associated with a network-accessible site to a third party service provider using a single scripting approach. Thus, the disclosed method eliminates the requirement of a back-end integration between the network-accessible site and the third party service provider, thereby reducing costs and implementation time and enabling faster update of information to a third party service provider. Due to the single scripting approach, the information in a third party database is updated in near real-time. The combination of the active reporting of information from the network-accessible site, semantic marking of published content on the network-accessible site and the anti-fraud module provide the third party service a near real-time and accurate view of the content published on the network-accessible site. The third party service provider can reuse the network-accessible site information and the user behavior data stored in the third party database to provide various services to users such as, but not limited to, advertisements, rendering product related information and discount offers.

Those skilled in the art will realize that the above-recognized advantages and other advantages described herein are merely exemplary and are not meant to be a complete rendering of all of the advantages of the various embodiments of the invention.

In the foregoing specification, specific embodiments of the invention have been described. However, one of ordinary skill in the art appreciates that various modifications and changes can be made without departing from the scope of the invention as set forth in the claims below. The invention is defined solely by the appended claims.

## Claims

1. A method for providing a third party service associated with a network-accessible site (110), the method comprising:
providing a client-side application in communication with a third party server (106) that is in communication with a third party database (108);
installing a client-side script on the client-side application (104),
the client side script gathering information associated with a network-accessible site (110) in response to access of the network-accessible site (110) via the client-side application (104), wherein
the gathered information associated with the network-accessible site (110) comprising:
a user identifier,
structured content published on the network-accessible site (110) in accordance with a semantic mark-up format; and
user behavior data associated with access of the network-accessible site (110);
the client-side script transferring the gathered information to the third party server (106);
the third party server (106) storing the gathered information received from the client-side script in a form of replica of network- accessible site records in the database (108),
the third party server (106) providing a third-party service in the form of personalized content to the user based on the gathered information,
the created replica including structured content in the database (106) based on the gathered information via the client-side script;
dynamically updating the replica including the structured content based on updated information associated with the network-accessible site and gathered via the client-side script;
the third party server (106) forwarding the replica of the network-accessible site record to one or more additional service providers (115),
the third party server (106) extending the client-side script by adding one or more service provider specific segments for sharing the network-accessible site and user behavior data with one or more additional service providers (115),
the client-side script extended by the third party server (106) reporting the gathered information to the one or more additional service providers (115); and
the one or more additional service providers (115) creating a personalized content for identified users by making use of the gathered information.

2. The method of claim 1 wherein the method further comprises sharing the network-accessible site (110), user identifier and behavior data stored by the third party server (106) and the one or more additional service providers (115).

3. The method of claim 1 wherein the method further comprises creating personalized content for identified users based on the gathered information reported by the client-side script.

4. The method of claim 1 wherein the method further comprises verifying accuracy of the gathered information, wherein the verification is performed based on at least one of:
by utilizing statistical methods to find correct information gathered from multiple users by comparing different versions of information received by one or more users and by choosing the most popular one;
by verifying the content published on one or more network-accessible sites (110) by mimicking client-side application (104) to fetch the information from the one or more network-accessible sites (110) using a crawler; and
by using past behavior of the user to rank trustworthiness of the user by means of data gathered via the client-script.

5. The method of claim 1, wherein the client-side script is one of a JavaScript, a Visual Basic script, Ecmascript, Dart, Flash, Silverlight, Native Client modules and Java.

6. The method of claim 1, wherein the client-side application is a browser.

7. The method of claim 1, wherein the client-side application is a mobile phone application.

8. A system for providing a third party service, the system comprising:
a network-accessible site (110) having a page (112-1), the page (112-1) comprising visible information containing a structured content being visible on the network-accessible site (110), and invisible information being invisible on the network accessible site (110), the invisible information comprising user-behavior data and a semantic mark-up of the structured content;
a client-side script installed on a client-side application (104);
the client-side script being in communication with the network-accessible site (110) to gather information associated with the network-accessible site (110) in response to access of the network-accessible site (110) via the client-side application (104);
the gathered information gathered by the client-side script comprising:
a user identifier,
structured content published on the network-accessible site (110); and
user behavior data associated with access of the network-accessible site (110); and
a third-party server (106) in communication with the client-side script to receive the gathered information associated with the network-accessible site (110) from the client-side script,
the third-party server (106) being in communication with the client-side application (104) to provide a third party service based on the gathered information received from the client-side script,
the third-party server (106) being connected to a database (108) to store the gathered information in a form of replica of network-accessible site records; and
the third-party server (106) having updating means for dynamically updating the replica of network-accessible site records;
additional databases (114a, 144b, 114c) with replica of network-accessible site records held by one or more additional service providers (115),
the client- side script having a segment for sharing the network-accessible site and user behavior data with one or more additional service providers (115).

9. The system of claim 8, wherein the server further comprises an anti-fraud module to verify the gathered information received from the client-side script.

10. The system of claim 8, wherein the additional service providers (115) are in communication with the client-side script to receive the gathered information associated with the network-accessible site (110) from the client-side script that has a service provider specific segment for sharing network-accessible site and user behavior data from identified users.

11. The system of claim 10, wherein the user identifier is associated with the shared information of the network-accessible site data and behavior of a given user for the identification of the user.

12. The system of claim 10, wherein an identified user is a user that is provided with personalized content affected by a behavior in other services provided by the service provider and/or additional service providers (115).

## Patentansprüche

1. Verfahren zur Bereitstellung eines mit einer netzzugänglichen Site (110) verknüpften Fremddienstes, wobei das Verfahren umfasst:
Bereitstellen einer Client-seitigen Anwendung in Kommunikation mit einem Fremdserver (106), der mit einer Fremddatenbank (108) in Kommunikation steht;
Installieren eines Client-seitigen Scripts auf der Client-seitigen Anwendung (104),
wobei das Client-seitige Script in Reaktion auf einen Zugriff auf die netzzugängliche Site (110) über die Client-seitige Anwendung (104) Informationen sammelt, die mit der netzzugänglichen Site (110) verknüpft sind, wobei
die mit der netzzugänglichen Site (110) verknüpften gesammelten Informationen umfassen:
eine Benutzerkennung,
auf der netzzugänglichen Site (110) veröffentlichten strukturierten Content entsprechend einem semantischen Markup-Format; und
Benutzerverhaltensdaten, die mit dem Zugriff auf die netzzugängliche Site (110) verknüpft sind;
wobei das Client-seitige Script die gesammelten Informationen an den Fremdserver (106) sendet;
wobei der Fremdserver (106) die aus dem Client-seitigen Script empfangenen gesammelten Informationen in Form von Replikaten von Datensätzen der netzzugänglichen Site in der Datenbank (108) speichert,
wobei der Fremdserver (106) anhand der gesammelten Informationen einen Fremddienst in Form von personalisiertem Content an einen Benutzer bereitstellt,
wobei die erstellten Replikate in der Datenbank (106) strukturierten Content basierend auf den über das Client-seitige Script gesammelten Informationen umfassen;
dynamisches Aktualisieren der den strukturierten Content umfassenden Replikate basierend auf aktualisierten mit der netzzugänglichen Seite verknüpften und über das Client-seitige Script gesammelten Informationen;
wobei der Fremdserver (106) die Replikate des Datensatzes der netzzugänglichen Site an einen oder mehrere Zusatzdienstleister (115) weiterleitet,
wobei der Fremdserver (106) das Client-seitige Script erweitert, indem er ein oder mehrere Dienstleister-spezifische Segmente hinzufügt, um die netzzugängliche Site und Benutzerverhaltensdaten mit einem oder mehreren Zusatzdienstleistern (115) gemeinsam zu nutzen,
wobei das vom Fremdserver (106) erweiterte Client-seitige Script die gesammelten Informationen an den einen oder die mehreren Zusatzdienstleister (115) meldet; und
wobei der eine oder die mehreren Zusatzdienstleister (115) unter Nutzung der gesammelten Informationen einen personalisierten Content für identifizierte Benutzer erstellt.

2. Verfahren nach Anspruch 1, wobei das Verfahren ferner umfasst: gemeinsame Nutzung der netzzugänglichen Site (110), der Benutzerkennung und der von dem Fremdserver (106) und dem einen oder den mehreren Zusatzdienstleistern (115) gespeicherten Verhaltensdaten.

3. Verfahren nach Anspruch 1, wobei das Verfahren ferner umfasst: Erstellen von personalisiertem Content für identifizierte Benutzer basierend auf den vom Client-seitigen Script gemeldeten gesammelten Informationen.

4. Verfahren nach Anspruch 1, wobei das Verfahren ferner umfasst: Überprüfen der Richtigkeit der gesammelten Informationen, wobei die Überprüfung basierend auf mindestens einem von Folgendem erfolgt:
durch Nutzung statistischer Verfahren zur Feststellung korrekter Informationen von mehreren Benutzern durch Vergleichen unterschiedlicher Versionen der durch einen oder mehrere Benutzer empfangenen Informationen und Auswählen der gängigsten Version;
durch Überprüfen des auf einer oder mehreren netzzugänglichen Sites (110) veröffentlichten Contents durch Imitieren einer Client-seitigen Anwendung (104), um die Informationen aus der einen oder den mehreren netzzugänglichen Sites (110) mit Hilfe eines Crawlers abzurufen; und
durch Nutzung eines zeitlich zurückliegenden Verhaltens des Benutzers, um die Vertrauenswürdigkeit des Benutzer mittels der über das Client-Script gesammelten Daten zu bewerten.

5. Verfahren nach Anspruch 1, wobei das Client-seitige Script eines von JavaScript, Visual-Basic-Script, Ecmascript, Dart, Flash, Silverlight, Native-Client-Module und Java ist.

6. Verfahren nach Anspruch 1, wobei die Client-seitige Anwendung ein Browser ist.

7. Verfahren nach Anspruch 1, wobei die Client-seitige Anwendung eine Mobiltelefon-App ist.

8. System zur Bereitstellung eines Fremddienstes, wobei das System umfasst:
eine netzzugängliche Site (110) mit einer Seite (112-1), wobei die Seite (112-1) sichtbare Informationen, die einen auf der netzzugänglichen Site (110) sichtbaren strukturierten Content enthalten, und unsichtbare Informationen, die auf der netzzugänglichen Site (110) unsichtbar sind, umfasst, wobei die unsichtbaren Informationen Benutzerverhaltensdaten und ein semantisches Markup des strukturierten Contents umfassen;
ein auf einer Client-seitigen Anwendung (104) installiertes Client-seitiges Script,
wobei das Client-seitige Script mit der netzzugänglichen Site (110) in Kommunikation steht, um in Reaktion auf einen Zugriff auf die netzzugängliche Site (110) über die Client-seitige Anwendung (104) Informationen zu sammeln, die mit der netzzugänglichen Site (110) verknüpft sind;
wobei die vom Client-seitigen Script gesammelten Informationen umfassen:
eine Benutzerkennung,
auf der netzzugänglichen Site (110) veröffentlichten strukturierten Content; und
Benutzerverhaltensdaten, die mit dem Zugriff auf die netzzugängliche Site (110) verknüpft sind; und
einen Fremdserver (106) in Kommunikation mit dem Client-seitigen Script zum Empfangen der mit der netzzugänglichen Site (110) verknüpften gesammelten Informationen aus dem Client-seitigen Script,
wobei der Fremdserver (106) mit der Client-seitigen Anwendung (104) in Kommunikation steht, um basierend auf den vom Client-seitigen Script empfangenen gesammelten Informationen einen Fremddienst bereitzustellen,
wobei der Fremdserver (106) mit einer Datenbank (108) verbunden ist, um die gesammelten Informationen in Form von Replikaten von Datensätzen der netzwerkzugänglichen Site zu speichern; und
wobei der Fremdserver (106) ein Aktualisierungsmittel für die dynamische Aktualisierung der Replikate der Datensätze der netzzugänglichen Site aufweist;
zusätzliche Datenbanken (114a, 114b, 114c) mit Replikaten der von einem oder mehreren Zusatzdienstleistern (115) geführten Datensätze der netzzugänglichen Site,
wobei das Client-seitige Script ein Segment aufweist, um die netzzugängliche Site und die Benutzerverhaltensdaten mit einem oder mehreren Zusatzdienstleistern (115) gemeinsam zu nutzen.

9. System nach Anspruch 8, wobei der Server ferner ein Anti-Fraud-Modul aufweist, um die aus dem Client-seitigen Script empfangenen gesammelten Informationen zu überprüfen.

10. System nach Anspruch 8, wobei die Zusatzdienstleister (115) mit dem Client-seitigen Script in Kommunikation stehen, um die mit der netzzugänglichen Site (110) verknüpften gesammelten Informationen aus dem Client-seitigen Script zu empfangen, das ein Dienstleister-spezifisches Segment zur gemeinsamen Nutzung der netzzugänglichen Site und der Benutzerverhaltensdaten von identifizierten Benutzern aufweist.

11. System nach Anspruch 10, wobei die Benutzerkennung mit den gemeinsam genutzten Informationen der Daten der netzzugänglichen Site und des Verhaltens eines gegebenen Benutzers verknüpft wird, um den Benutzer zu identifizieren.

12. System nach Anspruch 10, wobei ein identifizierter Benutzer ein Benutzer ist, dem personalisierter Content, der durch ein Verhalten in anderen vom Dienstleister und/oder von Zusatzdienstleistern (115) bereitgestellten Diensten beeinflusst wird, bereitgestellt wird.

## Revendications

1. Procédé pour fournir un service tiers associé à un site accessible en réseau (110), ledit procédé comprenant les étapes consistant à
fournir une application côté client en communication avec un serveur tiers (106) qui est en communication avec une base de données tierce (108) ;
installer un script côté client sur l'application côté client (104),
ledit script côté client collectant des informations associées au site accessible en réseau (110) en réponse à un accès au site accessible en réseau (110) via l'application côté client (104),
lesdites informations associées au site accessible en réseau (110) comprenant :
un identifiant utilisateur,
du contenu structuré publié sur le site accessible en réseau (110) selon un format de balisage sémantique ; et
des données de comportement d'utilisateur associées à l'accès au site accessible en réseau (110) ;
ledit script côté client transférant les informations collectées à un serveur tiers (106);
ledit serveur tiers (106) stockant les informations collectées reçues du script côté client sous forme de réplica d'enregistrements du site accessible en réseau dans la base de données (108),
ledit serveur tiers (106) fournissant à l'utilisateur un service tiers sous forme de contenu personnalisé sur la base des informations collectées,
ledit réplica créé comprenant un contenu structuré dans la base de données (106) sur la base des informations collectées via le script côté client ;
mettre à jour de manière dynamique le réplica comprenant un contenu structuré sur la base des informations remises à jour qui sont associées au site accessible en réseau et collectées via le script côté client ;
ledit serveur tiers (106) relayant le réplica de l'enregistrement du site accessible en réseau vers un ou plusieurs fournisseurs de services supplémentaires (115),
ledit serveur tiers (106) élargissant le script côté client en rajoutant un ou plusieurs segments spécifiques aux fournisseurs de services pour partager le site accessible en réseau et les données de comportement d'utilisateur avec un ou plusieurs fournisseurs de services supplémentaires (115),
ledit script côté client élargi par le serveur tiers (106) communiquant les informations collectées auxdits un ou plusieurs fournisseurs de services supplémentaires (115) ; et lesdits un ou plusieurs fournisseurs de services supplémentaires (115) utilisant les informations collectées pour créer des contenus personnalisés pour des utilisateurs identifiés.

2. Procédé selon la revendication 1, ledit procédé comprenant également l'étape consistant à partager le site accessible en réseau (110), l'identifiant utilisateur et des données de comportement stockées par le serveur tiers (106) et lesdits un ou plusieurs fournisseurs de services supplémentaires (115).

3. Procédé selon la revendication 1, ledit procédé comprenant également l'étape consistant à créer des contenus personnalisés pour des utilisateurs identifiés sur la base des informations collectées communiquées par le script côté client.

4. Procédé selon la revendication 1, ledit procédé comprenant également la vérification de l'exactitude des informations collectées, ladite vérification étant réalisée sur la base d'au moins l'un de ce qui suit :
en utilisant des méthodes statistiques pour trouver des informations correctes collectées sur plusieurs utilisateurs en comparant différentes versions d'informations reçues par un ou plusieurs utilisateurs et en optant pour celle qui est la plus populaire ;
en vérifiant les contenus publiés sur un ou plusieurs sites accessibles en réseau (110) en imitant une application côté client (104) pour extraire les informations desdits un ou plusieurs sites accessibles en réseau (110) à l'aide d'un robot collecteur ; et
en utilisant le comportement antérieur de l'utilisateur pour classer la fiabilité de l'utilisateur au moyen de données collectées par le script-client.

5. Procédé selon la revendication 1, dans lequel le script côté client est l'un parmi JavaScript, un script Visual Basic, Ecmascript, Dart, Flash, Silverlight, des modules de client natif et Java.

6. Procédé selon la revendication 1, dans lequel l'application côté client est un logiciel navigateur.

7. Procédé selon la revendication 1, dans lequel l'application côté client est une application de téléphone mobile.

8. Système de fourniture d'un service tiers, ledit système comprenant :
un site accessible en réseau (110) comportant une page (112-1), ladite page (112-1) comprenant des informations visibles contenant un contenu structuré visible sur le site accessible en réseau (110), et des informations invisibles qui sont invisibles sur le site accessible en réseau (110), lesdites informations invisibles comprenant des données de comportement d'utilisateur et un balisage sémantique du contenu structuré ;
un script côté client installé sur une application côté client (104) ;
ledit script côté client étant en communication avec le site accessible en réseau (110) pour collecter des informations associées au site accessible en réseau (110) en réponse à un accès au site accessible en réseau (110) via l'application côté client (104),
lesdites informations collectées par le script côté client comprenant :
un identifiant utilisateur,
du contenu structuré publié sur le site accessible en réseau (110) ; et
des données de comportement d'utilisateur associées à l'accès au site accessible en réseau (110) ; et
un serveur tiers (106) en communication avec le script côté client pour recevoir du script côté client les informations collectées associées au site accessible en réseau (110),
ledit serveur tiers (106) étant en communication avec l'application côté client (104) pour fournir un service tiers sur la base des information collectées reçues du script côté client, ledit serveur tiers (106) étant relié à une base de données (108) pour stocker les informations collectées sous forme de réplica d'enregistrements de site accessible en réseau ; et
ledit serveur tiers (106) ayant des moyens de mise à jour pour la mise à jour dynamique du réplica des enregistrements du site accessible en réseau ;
des bases de données supplémentaires (114a, 114b, 114c) avec des réplicas des enregistrements de site accessible en réseau tenus par un ou plusieurs fournisseurs de services supplémentaires (115),
ledit script côté client comprenant un segment pour partager le site accessible en réseau et les données de comportement d'utilisateur avec un ou plusieurs fournisseurs de services supplémentaires (115).

9. Système selon la revendication 8, dans lequel le serveur comprend également un module anti-fraude pour vérifier les informations collectées reçues du script côté client.

10. Système selon la revendication 8, dans lequel les fournisseurs de services supplémentaires (115) sont en communication avec le script côté client pour recevoir les informations collectées associées au site accessible en réseau (110) en provenance du script côté client qui comporte un segment spécifique au fournisseur de service pour partager le site accessible en réseau et les données de comportement d'utilisateur en provenance d'utilisateurs identifiés.

11. Système selon la revendication 10, dans lequel l'identifiant utilisateur est associé aux informations partagées des données du site accessible en réseau et du comportement d'un utilisateur donné pour l'identification de l'utilisateur.

12. Système selon la revendication 10, dans lequel un utilisateur identifié est un utilisateur qui est doté d'un contenu personnalisé affecté par un comportement dans d'autres services fournis par le fournisseur de service et/ou les fournisseurs de services supplémentaires (115).
